# EUROPEAN PATENT APPLICATION

(11) **EP 4 819 099 A1**
(43) Date of publication of application: **07.10.2026**
(21) Application number: 24897139.2
(22) Date of filing: 21.10.2024
(51) Int. Cl.: G08G 1/16, B60W 30/09, B60W 50/14, B60W 60/00

(54) **PRESENTATION CONTROL DEVICE, PRESENTATION CONTROL METHOD, AUTONOMOUS DRIVING CONTROL DEVICE, AND AUTONOMOUS DRIVING CONTROL METHOD**

(30) Priority: 29.11.2023 JP 2023202048
(71) Applicant: DENSO CORPORATION, Kariya-city, Aichi-pref., 448-8661 (JP)
(72) Inventor: ASAI Tomoka, Kariya-city, Aichi-pref., 448-8661 (JP); KOBAYASHI Mitsuyuki, Kariya-city, Aichi-pref., 448-8661 (JP); HAYASHI Akihiro, Kariya-city, Aichi-pref., 448-8661 (JP); IZUMI Kazuki, Kariya-city, Aichi-pref., 448-8661 (JP); MAKI Kenichi, Kariya-city, Aichi-pref., 448-8661 (JP)
(74) Representative: Winter, Brandl - Partnerschaft mbB
(86) International application number: PCT/JP2024/037359
(87) International publication number: WO 2025/115449

(57) **Abstract**

An HMI control device functions as a presentation control device that controls presentation of information to an occupant of a host vehicle. The HMI control device acquires detection information on an emergency vehicle approaching the host vehicle and ascertains whether or not the number of emergency vehicles approaching the host vehicle is more than one. The HMI control device uses different manners of approach notification to indicate emergency vehicle approach to the occupant depending on whether the number of emergency vehicles approaching the host vehicle is one or more than one.

## Description

### CROSS REFERENCE TO RELATED APPLICATIONS

This application is based on Patent Application No. 2023-202048 filed in Japan on November 29, 2023, and the contents of the basic application are incorporated herein by reference in its entirety.

### TECHNICAL FIELD

The disclosure by this specification relates to a technology of presentation control that controls presentation of information, and to a technology of automated driving control for autonomous traveling of a vehicle.

### BACKGROUND ART

Patent literature 1 discloses a blind spot vehicle sound detection system able to detect a direction of a different vehicle in an obstacle blind spot.

### PRIOR ART LITERATURE

### PATENT LITERATURE

Patent literature 1: JP 2012-146149A

### SUMMARY OF THE INVENTION

The inventors of the present disclosure have arrived at an idea of using the different vehicle detection technology as in Patent literature 1 to recognize an emergency vehicle. Such detection technology may make it possible to detect two or more emergency vehicles.

An object of the present disclosure is to provide a presentation control device, a presentation control method, an automated driving control device, and an automated driving control method that are useful for occupants when two or more emergency vehicles are detected.

One disclosed aspect for achieving the above object is a presentation control device that controls presentation of information to an occupant of a host vehicle (Am), comprising: an information acquisition unit that acquires detection information on an emergency vehicle approaching the host vehicle and ascertains whether or not the number of emergency vehicles approaching the host vehicle is more than one; and a notification control unit that executes an approach notification to indicate emergency vehicle approach to the occupant in different manners depending on whether the number of emergency vehicles approaching the host vehicle is one or more than one.

Further, one disclosed aspect is a presentation control method of controlling presentation of information to an occupant of a host vehicle, comprising a process executed by at least one processing unit, the process including steps of: acquiring detection information on an emergency vehicle approaching the host vehicle; ascertaining whether or not the number of emergency vehicles approaching the host vehicle is more than one; and executing a notification control to indicate emergency vehicle approach to the occupant in different manners depending on whether the number of emergency vehicles approaching the host vehicle is one or more than one.

In these modes, the approach notification is executed in different manners depending on whether the number of emergency vehicles approaching the host vehicle is one or more than one. Therefore, from the approach notification, the occupant of the host vehicle can ascertain whether the number of emergency vehicles approaching the host vehicle is one or more than one. Thus, it is possible to execute information presentation useful for the occupant when two or more emergency vehicles are detected.

Further, one disclosed aspect is an automated driving control device enabling a host vehicle to travel under an autonomous traveling control, comprising: an information acquisition unit that acquires detection information on an emergency vehicle approaching the host vehicle and ascertains whether or not the number of emergency vehicles approaching the host vehicle is more than one; and a behavior control unit that executes different contents of avoidance behavior for avoiding the emergency vehicle, depending on whether the number of emergency vehicles approaching the host vehicle is one or more than one.

Further, one disclosed aspect is an automated driving control method enabling a host vehicle to travel under an autonomous traveling control, comprising a process executed by at least one processing unit, the process including steps of: acquiring detection information on an emergency vehicle approaching the host vehicle; ascertaining whether or not the number of emergency vehicles approaching the host vehicle is more than one; and executing different contents of avoidance behavior for avoiding the emergency vehicle, depending on whether the number of emergency vehicles approaching the host vehicle is one or more than one.

In these aspects, different contents of the avoidance behavior for avoiding the emergency vehicle are executed depending on whether the number of emergency vehicles approaching the host vehicle is one or more than one. Therefore, the host vehicle can execute the avoidance behavior that corresponds to the number of emergency vehicles approaching the host vehicle. Therefore, it is possible to achieve the automated driving control useful for the occupant when two or more emergency vehicles are detected.

Reference numerals in parentheses in the claims, etc., merely indicate examples of correspondence relationships with concrete configurations in the below-described embodiments and do not limit the technical scopes. Claims are combinable to extents that the combination is not infeasible in particular, even if such a combination is not explicitly described in the unit "claims."

### BRIEF DESCRIPTION OF THE DRAWINGS

FIG. 1 is a diagram showing an overall view of an in-vehicle network including an automated driving ECU and an HMI control device according to one embodiment of the present disclosure.
FIG. 2 is a block diagram showing details of each of the automated driving ECU and the HMI control device together with related configurations.
FIG. 3 is a diagram showing listing of types of sirens sounded by emergency vehicles.
FIG. 4 is a flowchart showing details of an emergency vehicle recognition process executed by the automated driving ECU.
FIG. 5 is a flowchart showing details of an emergency vehicle avoidance process executed by the automated driving ECU.
FIG. 6 is a flowchart showing details of a rescue action process executed by the automated driving ECU.
FIG. 7 is a flowchart showing details of an emergency vehicle notification process executed by the HMI control device.

### EMBODIMENTS FOR CARRYING OUT THE INVENTION

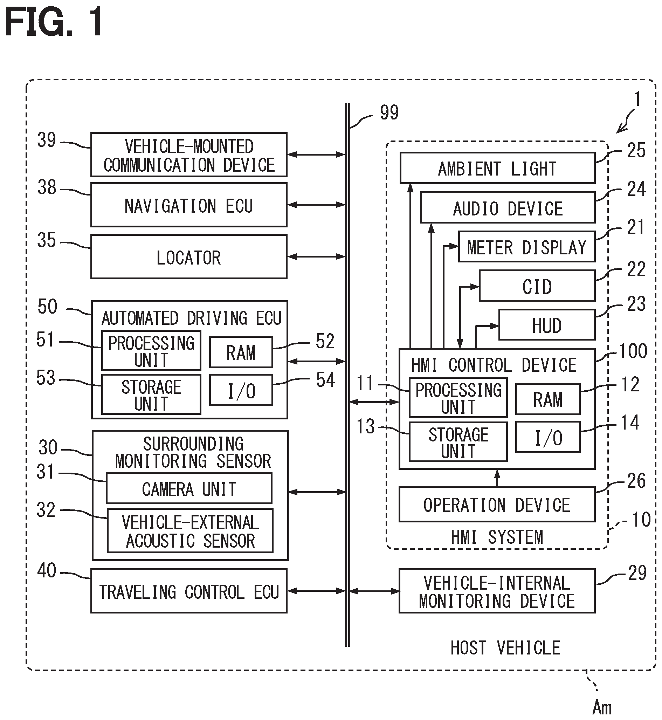

Functions of an automated driving control device according to one embodiment of the present disclosure are implemented by an automated driving ECU (Electronic Control Unit) 50 shown in FIG. 1. The automated driving ECU 50 is mounted to a vehicle (hereinafter referred to as host vehicle Am). The host vehicle Am mounted with the automated driving ECU 50 is an automated driving vehicle or an autonomous traveling vehicle equipped with an automated driving function. Driving automation levels in the present disclosure are based on standards defined by U.S. A. Society of Automotive Engineers. In the present disclosure, "autonomous travelling control" refers to the autonomous traveling control of driving automation level 3 or higher by the automated driving ECU 50.

During an automated traveling time period where the host vehicle Am travels under the autonomous traveling control by the automated driving ECU 50, a driver may be permitted to do prescribed specific acts (hereinafter, called second tasks) other than driving. During the automated traveling time period under the driving automation level 3, the driver is legally permitted to do the second task until the automated driving ECU 50 issues a driving takeover request in cooperation with an HMI (Human Machine Interface) control device 100. Supposed examples of the second tasks include watching entertainment contents such as video, operating a device such as smartphone, and eating.

The automated driving ECU 50 is communicably connected to a communication bus 99 of the in-vehicle network 1 mounted to the host vehicle Am. Connected to the communication bus 99 are an vehicle-internal monitoring device 29, a surrounding monitoring sensor 30, a locator 35, a navigation ECU 38, a vehicle-mounted communication device 39, a traveling control ECU 40, and an HMI control device 100. These nodes connected to the communication bus 99 are communicable with each other. Among these ECUs, etc., specific nodes may have direct electrical connection therebetween and may be communicable with each other not via the communication bus 99.

The vehicle-internal monitoring device 29 includes at least one in-cabin camera that images an inside of the host vehicle Am and a control unit that controls the in-cabin camera. The in-cabin camera may be a visible light camera or a near-infrared camera combined with a near-infrared light source. At least one in-cabin camera is arranged to be able to image an occupant seated on the driver seat (driver) and functions as a driver monitor. The vehicle-internal monitoring device 29 provides the image captured by the in-cabin camera or the result of image analysis on the captured image to the automated driving ECU 50 and the HMI control device 100 as vehicle-internal monitor information. The vehicle-internal monitor information includes occupant identification information that identifies the occupant (mainly the driver) currently in the host vehicle Am from among pre-registered occupants, and driver status information that indicates the driver's eye point position and direction of gaze. The occupant identification information may be information that identifies only the driver among the occupants or may include information that identifies an occupant other than the driver.

The surrounding monitoring sensor 30 is an autonomous sensor that is mounted to the host vehicle Am and monitors an environment around the host vehicle Am. The surrounding monitoring sensor 30 is capable of detecting a moving object and a stationary object in a detection range around the host vehicle. The surrounding monitoring sensor 30 provides detection information on an object around the host vehicle to the automated driving ECU 50, etc. The surrounding monitoring sensor 30 includes a camera unit 31 and a vehicle-external acoustic sensor 32. The surrounding monitoring sensor 30 may further include a millimeter wave radar, a lidar, and a sonar.

The camera unit 31 includes a front camera module, a rear camera module, a left-side camera module, and a right-side camera module, etc. The camera unit 31 can image an area all around the host vehicle Am by including two or more camera modules. The camera unit 31 outputs image data captured by each camera module or analysis information of the image data to the communication bus 99 as detection information.

The vehicle-external acoustic sensor 32 includes, as its main configuration, a microphone element for converting sound into an electrical signal. The microphone element functions as a condenser microphone that outputs an electrical signal representing a capacitance change due to sound pressure vibrating a thin vibration membrane. A Micro Electromechanical Systems (MEMS) microphone and the like are usable as microphone elements. The vehicle-external acoustic sensor 32 may be a piezoelectric microphone configuration using a piezoelectric sensor instead of a condenser microphone. The piezoelectric sensor converts sound into an electronic signal by means of a piezoelectric element. The vehicle-external acoustic sensor 32 is held by an exterior structure of the host vehicle Am in a position in which a sound-collecting surface of a microphone element or the like is directed toward the exterior structure of the host vehicle Am. Two or more vehicle-external acoustic sensors 32 are arranged to a front side, a rear side, a right side, a left side, and a ceiling of the host vehicle Am. The vehicle-external acoustic sensors 32 arranged to various positions are able to detect incoming sound from all around the host vehicle Am. The vehicle-external acoustic sensors 32 output sound data or sound data analysis information generated by each microphone element to the communication bus 99 as detection information.

The locator 35 is a configuration including a GNSS (Global Navigation Satellite System) receiver and an inertia sensor. The locator 35 successively executes positioning the host vehicle Am including a host vehicle location and a heading direction by combining the positioning signals received from multiple positioning satellites by the GNSS receiver, a measurement result of the inertia sensor, and vehicle speed information which is output to the communication bus 99. The locator 35 successively outputs the location information and the direction information of the host vehicle Am based on the positioning result to the communication bus 99 as locator information.

The locator 35 further includes a map database that stores map data. The map database includes, as its main configuration, a storage medium of a large capacity storing a number of 3D map data and 2D map data. The 3D map data are so-called HD (High Definition) maps, which contain road information necessary for automated driving. Specifically, the 3D map data includes information on a 3D shape of a road and detailed information on each lane. The locator 35 can update the 3D map data and the 2D map data to the latest information via the vehicle-mounted communication device 39 performing communication with an outside of the vehicle. The locator 35 reads the map data around the current location from the map database and provides it to the automated driving ECU 50, etc. together with the locator information.

The navigation ECU 38 acquires information on a destination designated by an occupant such as the driver or the like, based on operation information acquired from the HMI control device 100. The navigation ECU 38 acquires the host vehicle location and direction information from the locator 35 and sets a route from the current position to the destination. The navigation ECU 38 provides route information indicating the set route to the destination to the automated driving ECU 50, the HMI control device 100, etc. The navigation ECU 38, in cooperation with the HMI system 10 described below, notifies the driver about route guidance to the destination such as a traveling direction of the host vehicle Am at an intersection, a junction, etc., by combining screen display, voice message, etc.

A user terminal such as a smartphone and a tablet may be connected to the in-vehicle network 1 or the HMI control device 100. Such a user terminal may provide information on the host vehicle location, the direction information, and the map data to the automated driving ECU 50, etc., in place of the locator 35. Furthermore, the user terminal may provide the automated driving ECU 50, HMI control device 100, etc., with the information on the route to the destination, in place of the navigation ECU 38. The user terminal may also execute playback of video content, etc., in place the below described HMI system 10 or together with the HMI system 10.

The vehicle-mounted communication device 39 is a vehicle-external communication device mounted to the host vehicle Am. The vehicle-mounted communication device 39 functions as a V2X (Vehicle to Everything) communication device. The vehicle-mounted communication device 39 transmits and receive information via wireless communication to and from roadside equipment installed on the roadside. As an example, the vehicle-mounted communication device 39 receives traffic congestion information and traffic control information, etc. from the roadside equipment. The traffic congestion information and the traffic control information are, for example, VICS (registered trademark) information. The vehicle-mounted communication device 39 may further receive traffic signal information indicating lighting patterns of traffic signals, as well as detection information on stopped vehicles, parked vehicles, pedestrians, and cyclists, etc., from the roadside equipment. The vehicle-mounted communication device 39 provides the received traffic congestion information, the traffic control information, the traffic signal information, and the detection information to the navigation ECU 38, the automated driving ECU 50, the HMI control device 100, etc.

The traveling control ECU 40 is an electronic control unit including a microcontroller as its main component. The traveling control ECU 40 generates vehicle speed information indicating the current traveling speed of the host vehicle Am based on detection signals of wheel speed sensors mounted to hub portions of respective wheels, and outputs the generated vehicle speed information successively to the communication bus 99. The traveling control ECU 40 has at least functions of a braking control ECU, a driving control ECU, and a steering control ECU. The traveling control ECU 40 continuously executes a braking force control of each wheel, an output control of the powertrain 41, and a steering angle control based on any of: an operation command based on the driver's driving operation; and a control command from the automated driving ECU 50.

The HMI control device 100, together with a plurality of display devices, an audio device 24, an ambient light 25, and an operation device 26, etc., constitute the HMI system 10. The HMI system 10 has an input interface function of receiving an operation by an occupant such as the driver of the host vehicle Am and an output interface function of presenting information to the driver. The HMI control device 100 functions as a presentation control device according to one embodiment of the present disclosure.

The display device visually presents information to the driver by displaying images, etc. The display device includes a meter display 21, a center information display (hereinafter called CID) 22, and a head-up display (hereinafter called HUD) 23. The meter display 21 and the HUD 23 are display devices that present information to the driver seated on the driver seat. The CID 22 is a display device able to present information also to an occupant seated on the front passenger seat (passenger) in addition to the driver. The CID 22 has a touch panel function and detects a touch operation to the display screen by the driver or the like.

The audio device 24 includes a plurality of loudspeakers mounted in the cabin. The audio device 24 reproduces a notification sound or voice message, etc., in the cabin by means of a loudspeaker. The ambient light 25 is arranged to an instrument panel, a center console, a steering wheel, a door trim, etc. The ambient light 25 performs ambient display to change emission color, thereby attaining information presentation utilizing the driver's peripheral vision.

The operation device 26 is an input unit that receives a user operation executed by driver or the like. Examples of the user operation input to the operation device 26 include a user operation related to activation and deactivation of the automated driving function, a user operation related to setting the destination for route guidance, and a user operation related to setting the air conditioning. The operation device 26 includes a steer switch arranged on a spoke of a steering wheel, a control lever arranged to a steering column, and a speech input device that recognizes occupant's speech.

### <Details of Automated Driving ECU>.

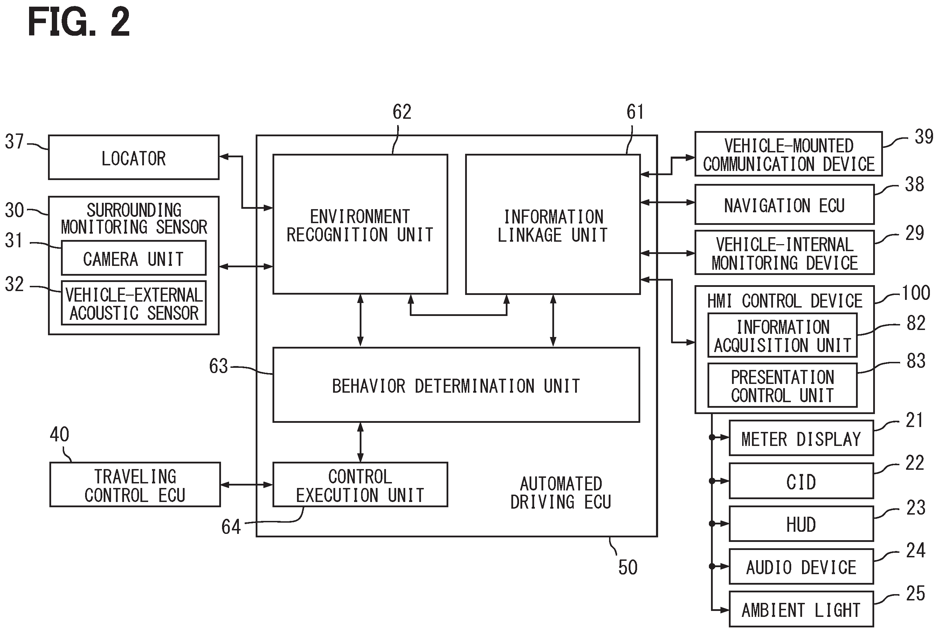

The automated driving ECU 50 shown in FIGS.1 and 2 is a computer including a control circuit as its main component, the control circuit including a processing unit 51, a RAM 52, a storage unit 53, an input/output interface 54, and a bus connecting these. The processing unit 51 executes various processes (instructions) to implement an automated driving control method according to the present disclosure by accessing the RAM 52. Various programs (automated driving control program, etc.) executed by the processing unit 51 are stored in the storage unit 53. An information linkage unit 61, an environment recognition unit 62, a behavior determination unit 63, and a control execution unit 64 are constructed in the automated driving ECU 50 as functional units for the automatic operation function by execution of a program by the processing unit 51.

The information linkage unit 61 enables information linkage of the automated driving ECU 50 with the vehicle-internal monitoring device 29, the navigation ECU 38, the vehicle-mounted communication device 39, and the HMI control device 100, etc. The information linkage unit 61 acquires the occupant identification information from the vehicle-internal monitoring device 29. The information linkage unit 61 ascertains the type of occupant in the host vehicle Am based on the occupant identification information. Specifically, it is ascertained whether or not a medical person such as a doctor, a nurse, a paramedic, etc., is in the host vehicle Am. The information linkage unit 61 acquires the route information from the navigation ECU 38 and provides the acquired route information to the environment recognition unit 62 and the behavior determination unit 63. The information linkage unit 61 requests the navigation ECU 38 to change (reestablish) the destination or the scheduled travel route by outputting a reroute request destined for the navigation ECU 38. The information linkage unit 61 provides the detection information received at the vehicle-mounted communication device 39 to the environment recognition unit 62.

The information linkage unit 61 outputs an execution request to the HMI control device 100 for notification to an inside of the host vehicle, thereby enabling the HMI control device 100 to execute the notification in synchronization with the operating state of the automated driving function. To the HMI control device 100, the information linkage unit 61 outputs information that triggers execution of the notification related to the approach of the emergency vehicle (hereafter, emergency vehicle-related information), such as an emergency vehicle approach notification, an inquiry notification, and an alert notification, which will be described later.

The environment recognition unit 62 combines: the locator information and the map data acquired from the locator 35; the detection information acquired from the surrounding monitoring sensor 30; and the vehicle speed information, etc. acquired from the communication bus 99, and recognizes the traveling environment of the host vehicle Am. The environment recognition unit 62 may acquire the detection information received at the vehicle-mounted communication device 39 from the information linkage unit 61 and use it to recognize the traveling environment. The environment recognition unit 62 acquires the road information related to the road on which the host vehicle Am is traveling or is scheduled to travel, as well as the relative position and relative speed of a dynamic object around the host vehicle, such as a different vehicle traveling around the host vehicle Am. The environment recognition unit 62 successively provides the behavior determination unit 63 with a result of recognizing the traveling environment, including the road information and the ascertained information on the dynamic object.

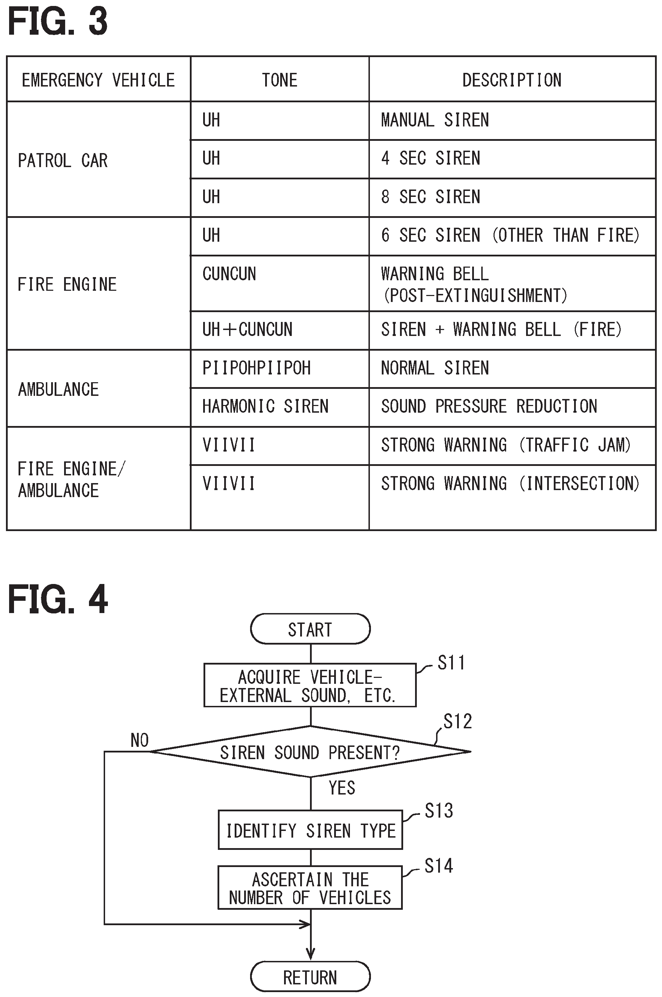

The environment recognition unit 62 ascertains incoming sound around the host vehicle Am. The environment recognition unit 62 executes the emergency vehicle recognition process (see FIG. 4) described later. In the emergency vehicle recognition process, the environment recognition unit 62 combines between the detection information based on the sound data from the vehicle-external acoustic sensor 32 and the detection information based on the image data from the camera unit 31 and thereby ascertains approach of the emergency vehicle, such as a police vehicle, fire truck, an ambulance, etc., to the host vehicle Am. The emergency vehicle in the present disclosure, unless otherwise described, refers to an emergency vehicle traveling for emergency duty.

By using the sound data, the environment recognition unit 62 recognizes the approach of the emergency vehicle sounding a siren sound earlier than by using the image data alone. In addition, by using the sound data, the environment recognition unit 62 determines a type of siren that the emergency vehicle is sounding. The environment recognition unit 62 identifies a tone of the siren, a length of one siren, and a presence or absence of alarm bell ringing (see FIG. 3). The environment recognition unit 62 can identify, for example, comfort siren, harmonic siren, etc. Based on the type of siren identified, the environment recognition unit 62 determines the type of the emergency vehicle approaching the host vehicle Am and the state of the emergency duty, etc.

When the environment recognition unit 62 ascertains that the emergency vehicle is approaching the host vehicle Am, the environment recognition unit 62 detects the relative position and the moving direction of the emergency vehicle. Based on this, the environment recognition unit 62 determines whether or not the emergency vehicle that was detected as approaching is in a state of getting apart from the host vehicle Am (hereinafter referred to as the "getting-apart state"). In addition, the environment recognition unit 62 further ascertains whether not the number of emergency vehicles approaching the host vehicle Am is two or more, based on the emergency vehicle detection information. Examples of a scene in which the host vehicle Am encounters two or more emergency vehicles include PA collaboration, an occurrence of a large-scale disaster, etc. The PA collaboration is a scene in which a fire engine (Pumper) and an ambulance (Ambulance) collaborate to provide ab emergency service. Examples of the large-scale disaster include building fire and wildfire.

When two or more emergency vehicles of the same type or, in other words, two or more emergency vehicles sounding the same siren sound are approaching, it may be difficult to determine whether or not the number of emergency vehicles is two or more. Thus, when it is not confirmable that the number of emergency vehicles approaching the host vehicle Am is two or more although there is a possibility that the number is two or more, the environment recognition unit 62 generates presumption information indicating presumption that the number of emergency vehicles are two or more. The detection information on the emergency vehicle, the getting-apart information on the emergency vehicle, the information on the number of emergency vehicles, the presumption information on the two or more vehicles, the siren type information, etc., ascertained by the environment recognition unit 62 are provided to the HMI control device 100 from the information linkage unit 61 as the emergency vehicle-related information described above.

When the automated driving ECU 50 has the right to control the driving tasks, the behavior determination unit 63 generates, based on the recognition result of the traveling environment by the environment recognition unit 62, a scheduled traveling line for the host vehicle Am to travel and outputs the generated scheduled traveling line to the control execution unit 64.

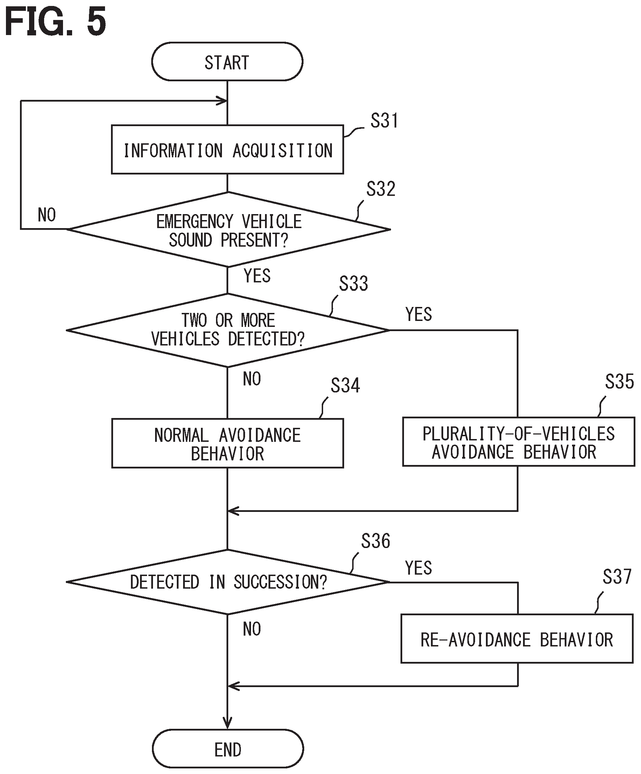

When the approach of the emergency vehicle to the host vehicle Am is recognized, the behavior determination unit 63 controls the behavior of the host vehicle Am so as to avoid the emergency vehicle (hereinafter referred to as "avoidance behavior"). When the approach of the emergency vehicle is recognized, the behavior determination unit 63 executes at least one of: a stop control; a low-speed travel control; and a reroute control, based on the emergency vehicle avoidance process (see FIG. 5) described below The stop control is a control to stop the host vehicle Am at a position away from the emergency vehicle by a given distance or more. The low-speed travel control is a control to suppress the traveling speed of the host vehicle Am. The reroute control is a control to reestablish the scheduled travel route of the host vehicle Am so as to avoid an estimated travel route of the emergency vehicle. The change in the scheduled travel route by the reroute control may be made via a process by the behavior determination unit 63 of changing the scheduled travel line, or via a process by the information linkage unit 61 of outputting a reroute request to the navigation ECU 38.

When the automated driving ECU 50 has the right to control the driving tasks, the control execution unit 64 executes control of acceleration deceleration, steering, etc. of the host vehicle Am following the scheduled traveling line generated by the behavior determination unit 63 in cooperation with the traveling control ECU 40. Specifically, the control execution unit 64 generates a control command based on the scheduled traveling line and successively outputs the generated control command to the traveling control ECU 40.

### <Details of HMI Control Device>

The HMI control device 100 is a computer that includes a control circuit as its main component, the control circuit including a processing unit 11, a RAM 12, a storage unit 13, an input/output interface 14, and a bus connecting these components. The HMI control device 100 functions as a presentation control device The HMI control device 100, in cooperation with the automated driving ECU 50, presents information related to the automated driving. The processing unit 11 executes various processes (instructions) for performing a presentation control method according to the present disclosure by accessing the RAM 12. The storage unit 13 stores various programs (such as a presentation control program) to be executed by the processing unit 11. By execution of the program by the processing unit 11, the information linkage unit 82 and presentation control unit 83, etc., are built into the HMI control device 100 as functional parts related to presentation control.

The information linkage unit 82 cooperates with the automated driving ECU 50 and the navigation ECU 38, etc. The information linkage unit 82 enables the sharing of information between the automated driving ECU 50 and the navigation ECU 38 and the HMI control device 100. The information linkage unit 82 provides the automated driving ECU 50, the navigation ECU 38, etc., with operation information of a user operation input to the operation device 26, etc. From the automated driving ECU 50, the information linkage unit 82 acquires control status information indicating a control status of the automated driving function and an execution request for notification related to the automated driving function, etc. The information linkage unit 82 acquires route information indicating the set route to the destination from the navigation ECU 38.

The information linkage unit 82 successively acquires the emergency vehicle-related information provided by the information linkage unit 61 of the automated driving ECU 50. The information linkage unit 82 ascertains the emergency vehicle approaching the host vehicle Am based on the acquired detection information. Based on the acquired getting-apart information, the information linkage unit 82 ascertains that the emergency vehicle is getting apart from the host vehicle Am, e.g., that the emergency vehicle has overtaken the host vehicle Am. Based on the acquired information on the number of emergency vehicles, the information linkage unit 82 ascertains whether or not the number of emergency vehicles approaching the host vehicle Am is two or more. Furthermore, based on the acquired presumption information, the information linkage unit 82 ascertains that the situation is such that although it is not confirmable the number is two or more, there is a possibility that the number of emergency vehicles approaching the host vehicle Am is two or more. Based on the acquired siren type information, the information linkage unit 82 ascertains the type of siren sounded by the emergency vehicle and thereby ascertains the type of the approaching emergency vehicle and the status of the emergency duty (see FIG. 3).

The presentation control unit 83 integrally controls the information presentation using two or more display devices including the audio device 24, the ambient light 25, etc. For example, when the autonomous traveling control is scheduled to be ended by the automated driving ECU 50, the presentation control unit 83 executes a notification requesting a driver for driving takeover based on the execution request acquired by the information linkage unit 82. The presentation control unit 83 also executes a notification related to the route guidance based on the route information generated by the navigation ECU 38.

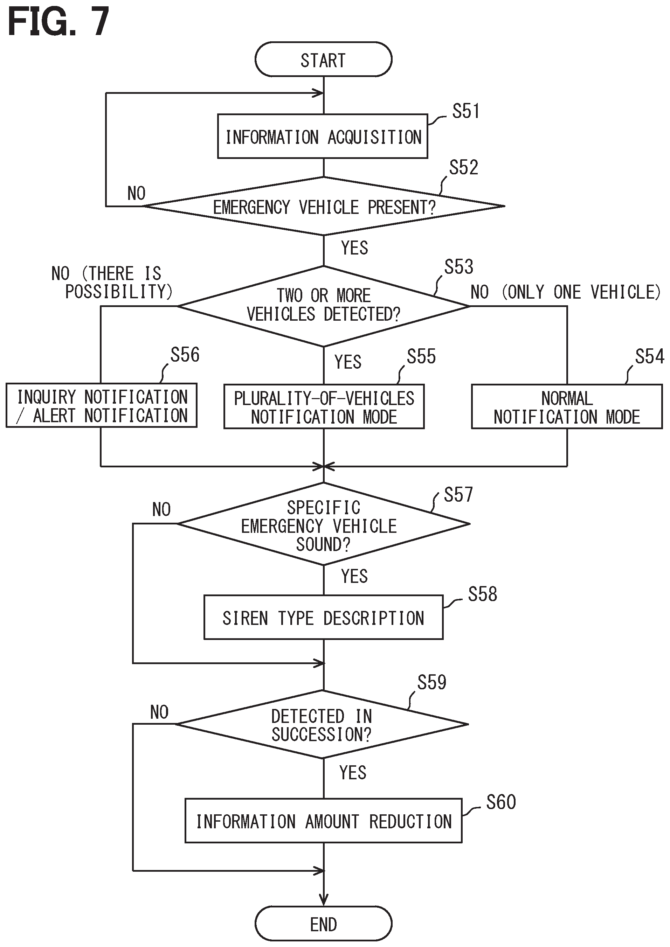

In the emergency vehicle notification process (see FIG. 7) described below, the presentation control unit 83 executes a vehicle-internal notification related to the emergency vehicle based on the emergency vehicle-related information acquired by the information linkage unit 82. The presentation control unit 83 executes the notification related to the emergency vehicle (hereinafter, emergency vehicle notification), such as an emergency vehicle approach notification, an inquiry notification, an alert notification, and a control duration notification.

The emergency vehicle approach notification is an approach notification indicating to the occupant that the emergency vehicle is approaching. As the emergency vehicle approach notification, the presentation control unit 83 displays an image (emergency vehicle icon) and a text message on the meter display 21 (or HUD 23) and the CID 22 indicating the approach of the emergency vehicle. When the information on the type of siren is acquired by the information linkage unit 82, the presentation control unit 83 adds detailed information to the emergency vehicle approach notification and indicates information related to the type of siren to the occupant. The detailed information, specifically, the type of the approaching emergency vehicle, the content of the emergency duty, etc., are notified by means of an icon or a text message. In addition, the presentation control unit 83 causes the loudspeaker of the audio device 24 to reproduce an audio message or a notification sound indicating the approach of then emergency vehicle as the emergency vehicle approach notification.

The inquiry notification and the alert notification are executed when presumption information is acquired by the information linkage unit 82. The inquiry notification is a notification to make an inquiry to the occupant about whether or not the number of emergency vehicles are two or more. The inquiry notification is executed using, for example, the CID 22. In the inquiry notification, the CID 22 displays a message "Can you confirm two or more emergency vehicles?" together with touch icons "Yes" and "No". In response to this inquiry notification, the driver or another occupant inputs a selection operation to the touch icon on the CID 22.

The alert notification is a notification issuing an alert about the possibility that two or more emergency vehicles are approaching. The alert notification is executed using, for example, the CID 22. In the inquiry notification, a text message such as " two or more emergency vehicles may be approaching" is displayed on the meter display 21 (or HUD 23) and the CID 22. In addition, the presentation control unit 83 may executes only one of: the inquiry notification and the alert notification. The presentation control unit 83 may also reproduce audio messages in the cabin by the audio device 24 as the inquiry notification and the alert notification.

The control duration notification is a notification that indicates time information related to the stop control or the low-speed travel control to the occupant of the host vehicle Am. The control duration notification is executed using, for example, the CID 22 when the automated driving ECU 50 executes the stop control or the low-speed travel control for avoidance behavior that avoids the emergency vehicle. In the control duration notification, an approximate remaining time of the duration of the avoidance behavior by the stop control or the low-speed control, or in other words, an estimated timing to end the control is indicated to the occupant. The remaining time presented in the control duration notification may be successively increased or decreased according to behavior of the emergency vehicle.

At least part of: the emergency vehicle approach notification included in the emergency vehicle notification; the inquiry notification; the alert notification; and the control duration notification may be controlled by the information linkage unit 61. In such a form, based on the execution request output from the information linkage unit 61 to the information linkage unit 82, the information linkage unit 82 executes the notification corresponding to the execution request.

### <Emergency Vehicle Handling Control During Driving Automation Level 3>.

The automated driving vehicle described so far needs to take care of the emergency vehicle approaching the host vehicle Am during the autonomous traveling time period, without relying on the driver's judgement. The system is more useful for the occupant if the controls to handle emergency vehicles are changed depending on the number of emergency vehicles and the detection timing, than a uniform handling control is executed when the emergency vehicle is detected. In the below, details of the emergency vehicle recognition process, the emergency vehicle avoidance process, and the emergency vehicle notification process executed in the system of the present disclosure for executing the control to handle the emergency vehicles will be described based on FIGS.4 to 7, with reference to FIGS. 1 and 2.

### [Emergency Vehicle Recognition Process].

In the emergency vehicle recognition process shown in FIG. 4, the approach of the emergency vehicle is recognized by the environment recognition unit 62. The environment recognition unit 62 can detect the approach of two or more emergency vehicles by using the acoustic recognition technology. The emergency vehicle recognition process is started based on the activation of the automated driving ECU 50 and is repeated until the automated driving ECU 50 stops operating.

In S11 of the emergency vehicle recognition process, the environment recognition unit 62 acquires the sound data generated by the vehicle-external acoustic sensor 32, wherein the sound data is data on the vehicle-external sound. The environment recognition unit 62 may acquire the analysis information of the sound data instead of or together with the sound data from a data processing unit associated with the vehicle-external acoustic sensor 32. At S12, the environment recognition unit 62 determines the presence or absence of a siren sound indicating the presence of an emergency vehicle based on the acquired sound data.

If the siren sound from the emergency vehicle is absent (S12: NO), the vehicle-external sound recognition process for this time is ended. In contrast, if the siren sound from the emergency vehicle (S12: YES) is present, the environment recognition unit 62 acquires the detection information on the emergency vehicle approaching the host vehicle Am. Then, in S13, the environment recognition unit 62 identifies the type of siren sounded by the emergency vehicle approaching the host vehicle Am by analyzing the sound data.

Specifically, the environment recognition unit 62 identifies the type of emergency vehicle approaching the vehicle Am and the state of emergency service, etc., and generates siren type information based on the determination results. The emergency vehicle-related information generated by the emergency vehicle recognition process described above is successively provided to the behavior determination unit 63 and the HMI control device 100 and is referenced in the emergency vehicle avoidance process and emergency vehicle notification process.

In S14, the environment recognition unit 62 ascertains the number of emergency vehicles approaching the host vehicle Am by analyzing the sound data. Specifically, the environment recognition unit 62 determines whether: the number of emergency vehicles approaching the host vehicle Am is one; the number of emergency vehicles approaching the host vehicle Am is two or more; or the number of emergency vehicles is not confirmable. Upon determining that two or more emergency vehicles are approaching the host vehicle Am, the environment recognition unit 62 generates vehicle-number information indicating the number of vehicles approaching the host vehicle Am. Additionally, when the number of emergency vehicles is not confirmable, the environment recognition unit 62 generates the presumption information indicating presumption that the number of emergency vehicles are two or more.

### [Emergency Vehicle Avoidance Process].

The emergency vehicle avoidance process shown in FIG. 5 is used to control the behavior of the vehicle Am so as to avoid the emergency vehicle. In the emergency vehicle avoidance process, different contents of the avoidance behavior of the host vehicle Am for avoiding the emergency vehicle are executed depending on whether the number of emergency vehicles approaching the host vehicle Am is only one or more than one. Similar to the emergency vehicle recognition process (see FIG. 4), the emergency vehicle avoidance process is started based on the activation of the automated driving ECU 50 and is repeated until the automated driving ECU 50 stops operating.

In S31 of the emergency vehicle avoidance process, the emergency vehicle-related information generated by acoustic sensing executed in the emergency vehicle recognition process is acquired. Then, in S32, with reference to the emergency vehicle related information, it is determined whether or not the sound of the emergency vehicle, such as the siren sound and the alarm bell ringing, has been detected. If the sound of the emergency vehicle has not been detected and the approach of the emergency vehicle is not recognized (S32: NO), a state of standby for the approach of the emergency vehicle is kept.

In contrast, if the sound of the emergency vehicle has been detected and the approach of the emergency vehicle is recognized (S32: YES), in S33, it is determined whether the approach of two or more emergency vehicles has been detected. If it has been detected that the number of approaching emergency vehicles is one (S33: NO), the behavior determination unit 63 executes the behavior control to make the host vehicle Am perform normal avoidance behavior in S34. Specifically, the behavior determination unit 63 executes the stop control or the low-speed travel control. When the number of emergency vehicles is not confirmed, the normal avoidance behavior may be executed.

In the stop control, the behavior determination unit 63 moves the vehicle Am out of the host vehicle lane toward the shoulder, and stops the vehicle Am at a specified evacuation site on the shoulder side. In addition, in the low-speed travel control, the behavior determination unit 63 offsets the position of the Am vehicle within the host vehicle lane to let the emergency vehicle go first, while continuing traveling at low speed.

In contrast, if it has been detected that two or more emergency vehicles are approaching (S33: YES), the behavior determination unit 63 in S35 executes the behavior control to make the vehicle Am perform avoidance behavior to avoid the two or more emergency vehicles (hereinafter, a plurality-of-vehicles avoidance behavior). Specifically, the behavior determination unit 63 execute a reroute control. In the reroute control, the behavior determination unit 63 reestablishes the planned travel route of the vehicle Am so as to: avoid estimated travel routes of the two or more emergency vehicles and travel in a direction away from the two or more emergency vehicles.

In S36, the behavior determination unit 63 determines whether or not the emergency vehicles have been detected in succession. If, after one detected emergency got apart from the host vehicle Am, another emergency vehicle is detected before elapse of a given time period, the behavior determination unit 63 determines that two or more emergency vehicles have been detected in succession. The given time period used in the emergency vehicle avoidance process is set to a time from when the getting-apart information of the one emergency vehicle is acquired or when a normal traveling control is resumed after the completion of the avoidance action for the one emergency vehicle and has a time length in a range, for example, from a few seconds to a dozen seconds.

If it is determined that the emergency vehicles have been detected in succession (S36: YES), the behavior determination unit 63 executes the behavior control for making the vehicle Am perform re-avoidance behavior in 37. In the re-avoidance behavior, the avoidance behavior for avoiding the second emergency vehicle is executed such that the content of the avoidance behavior for avoiding the second emergency vehicle is different from the first (normal) avoidance behavior for avoiding the first emergency vehicle. Specifically, the behavior determination unit 63 executes a reverse moving control or the reroute control. In contrast, if it is determined that the emergency vehicles have not been detected in succession (S36: NO), the emergency vehicle avoidance process for this time is ended.

In the reverse moving control, the behavior determination unit 63 causes the vehicle Am to move in reverse to return to the evacuation site where the vehicle Am stopped in the first avoidance behavior. The behavior determination unit 63 causes the host vehicle Am to be in the stopped state at the evacuation site until the second emergency vehicle passes the host vehicle Am. In the route control, the behavior determination unit 63 reestablishes the planned travel route of the host vehicle Am so as not to travel the roads that the two emergency vehicles are going to travel.

### [Rescue Action Process].

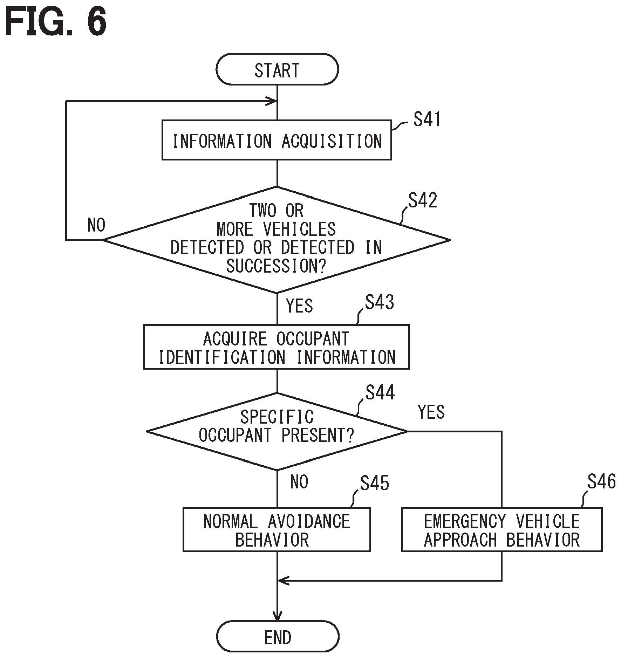

The rescue action process shown in FIG. 6 is used to control the behavior of the host vehicle Am to follow the emergency vehicle. Similar to the emergency vehicle avoidance process (see FIG. 5), the rescue action process is started based on the activation of the automated driving ECU 50 and is repeated until the automated driving ECU 50 stops operating.

In S41 of the rescue action process, the emergency vehicle-related information generated by the acoustic sensing executed in the emergency vehicle recognition process is acquired. Then, in S42, it is determined whether or not two or more approaching emergency vehicles have been detected and whether or not the emergency vehicles have been detected in succession. If the number of emergency vehicles approaching the host vehicle Am is not two nor more and the emergency vehicles have not been detected in succession (S42: NO), the state of standby for detection of two or more emergency vehicles or successive detection of emergency vehicles is kept.

In contrast, if the number of emergency vehicles approaching the host vehicle Am is two nor more or the emergency vehicles have been detected in succession (S42: YES), the information linkage unit 61 acquires the occupant identification information from the vehicle-internal monitoring device 29 in S43. Based on the acquired occupant identification information, the information linkage unit 61 determines in S44 whether or not a specific type of occupant, specifically, a medical person, is in the host vehicle Am. When the medical person is not in the vehicle Am (S44: NO), the behavior determination unit 63 executes the behavior control for making the vehicle Am perform the normal avoidance behavior in S45. In contrast, if the medical person is in the host vehicle Am (S44: YES), the behavior determination unit 63 causes the host vehicle Am to perform the behavior of approaching the emergency vehicle in S46. Specifically, the behavior determination unit 63 controls the traveling of the host vehicle Am so that the host vehicle follows the emergency vehicle.

### [Emergency Vehicle Notification Process].

The emergency vehicle notification process shown in FIG. 7 is used to notify the occupant about the approach of the emergency vehicle. In the emergency vehicle notification process, different contents of the emergency vehicle approach notification are executed depending on whether the number of emergency vehicles (two or more) approaching the host vehicle Am is one or more than one. The emergency vehicle avoidance process is started based on the activation of the automated driving ECU 50 and the HMI control device 100 and is repeated until these operations are stopped.

In S51 of the emergency vehicle notification process, the information linkage unit 82 acquires the emergency vehicle-related information, including the detection information on the emergency vehicle from the HMI control device 100. Based on the acquired detection information, the information linkage unit 82 ascertains in S52 whether or not there is an emergency vehicle approaching the host vehicle Am. If there is no detection information indicating the approach of the emergency vehicle (S52: NO), the process of information acquisition in S51 continues.

In contrast, if there is the detection information indicating the approach of the emergency vehicle (S52: YES), the information linkage unit 82 ascertains in S53 whether or not the number of emergency vehicles approaching the host vehicle Am is two or more, based on the acquired vehicle-number information and the presumption information, etc. If the number of emergency vehicles approaching the host vehicle Am is one (S53: NO, only one), the information linkage unit 82 sets an execution mode of the emergency vehicle notification to a normal notification mode in S54.

In contrast, if the number of the emergency vehicles approaching the host vehicle Am (S53: YES) is two or more, the presentation control unit 83 sets an execution mode of the emergency vehicle notification to a plurality-of-vehicles notification mode in S55. In the plurality-of-vehicles notification mode, the emergency vehicle approach notification is changed into a more emphasized manner than in the normal notification mode.

Specifically, the background color of the highlighted frame color for an emergency vehicle icon and a text message, etc., displayed on the display device is changed from an alert color (e.g., yellow, amber) in the normal notification mode to a warning color (e.g., red) in the plurality-of-vehicles notification mode. In the plurality-of-vehicles notification mode, the display size of the emergency vehicle icon and the text message, etc., is larger than in the normal notification mode. Furthermore, in the plurality-of-vehicles notification mode, the sound volume of the voice message reproduced by the audio device 24 is larger than in the normal notification mode. In addition, in the plurality-of-vehicles notification mode, the number of information presentation devices used for the emergency vehicle approach notification may be larger than in the normal notification mode. The text message or the voice message for notifying the user that the number is two or more may be added in the plurality-of-vehicles notification mode.

In addition, the control duration notification is executed in the plurality-of-vehicles notification mode. When the number of emergency vehicles approaching the host vehicle Am is two or more, the remaining duration of the avoidance behavior is indicated to the occupant by the control duration notification because the host vehicle Am is in a stopped state or a low-speed traveling state for a long period of time. In contrast, when the number of approaching emergency vehicles is one, the stopped state and the low-speed traveling state may not last for a long period of time. Therefore, in the normal notification mode, the control duration notification is not executed.

When the number of emergency vehicles approaching the host vehicle Am is not confirmed (S53: NO, there is a possibility of two or more vehicles), the presentation control unit 83 executes at least one of: the inquiry notification; and the alert notification in S56. If the occupant performs a touch operation indicating the approach of two or more emergency vehicles in response to the inquiry notification in S56, it may be determined in S33 of the emergency vehicle avoidance process (see FIG. 5) that the number of approaching emergency vehicles are two or more.

The information linkage unit 82 determines the presence or absence of the siren type information in S57. If the siren type information is available, the presentation control unit 83 ascertains the type of siren sounded by the emergency vehicle with reference to the siren type information. The presentation control unit 83 then determines if there is a specific (rare) emergency vehicle sound. If there is the specific emergency vehicle sound (S57: YES), the presentation control unit 83 adds detailed information related to the type of siren (type description), specifically, information indicating the type of emergency vehicle and the state of emergency duty, to the emergency vehicle approach notification in S58. In this case, the emergency vehicle icon is changed to an image corresponding to the type of approaching emergency vehicle. In addition, a text message indicating the content of the emergency duty, such as "going to the fire scene," is additionally displayed. If there is no siren type information or no specific emergency vehicle sound (S57: NO), S58 is skipped.

In S59, the information linkage unit 82 determines whether or not the emergency vehicles have been detected in succession. If, after one detected emergency vehicle got apart from the host vehicle Am, another emergency vehicle is detected before elapse of a given time period, the information linkage unit 82 determines that two or more emergency vehicles have been detected in succession. The given time period used in the emergency vehicle notification process is different from the given time period used in the emergency vehicle avoidance process (see FIG. 5). Specifically, the given time period is set to a time from when the getting-apart information of the one emergency vehicle is acquired or when a normal traveling control is resumed after the completion of the avoidance action for the one emergency vehicle and has a time length of about 1 minute.

If it is determined that emergency vehicles have been detected in succession (S59: YES), the information linkage unit 82 determines that the number of emergency vehicles approaching the host vehicle Am is two or more. In this case, the presentation control unit 83 changes the amount of information in the emergency vehicle approach notification in S60. Specifically, the presentation control unit 83 reduces the amount of information in the emergency vehicle approach notification. The presentation control unit 83 reduces the amount of information in the emergency vehicle approach notification by, for example, hiding the text message while displaying the emergency vehicle icon. In addition, the presentation control unit 83 reduces the amount of information in the emergency vehicle approach notification by reproducing the notification sound alone instead of reproducing the voice message. If it is determined that the emergency vehicles have not been detected in succession (S59: NO), S60 is skipped.

### <Embodiment Overview>.

In the present embodiment described so far, the emergency vehicle approach notification is executed in different manners depending on whether the number of emergency vehicles approaching the host vehicle Am is one or more than one. Therefore, from the emergency vehicle approach notification, the occupant of the host vehicle Am can ascertain whether the number of emergency vehicles approaching the host vehicle Am is one or more than one. Thus, it is possible to execute information presentation useful for the occupant when two or more emergency vehicles are detected.

In addition, in the present embodiment, as the number of emergency vehicles approaching the vehicle Am increases, the emergency vehicle approach notification is changed into a more emphasized manner. Therefore, the emergency vehicle approach notification can indicate the approach of two or more emergency vehicle to the host vehicle Am to the occupant in an easily understandable manner.

In the present embodiment, the type of siren sounded by the emergency vehicle is further ascertained. The additional information related to the type of siren is then indicated to the occupant. Therefore, even if the occupant does not understand the meaning of each of multiple types of sirens in detail, he or she can correctly understand the status of the approaching emergency vehicle by recognizing the additional information.

Furthermore, in the present embodiment, when the number of emergency vehicles approaching the host vehicle Am is not confirmed, the presumption information indicating presumption that the number of emergency vehicles is two or more. Then, based on the presumption information, at least one of the followings is executed: the inquiry report notification to make an inquiry to the occupant about whether or not two or more emergency vehicles are present; and an alert notification to issue an alert to the occupant about the possibility that two or more emergency vehicles are approaching. Therefore, even if it is difficult to accurately detect the number of emergency vehicles in a scene where, for example, two or more emergency vehicles sounding the same siren are approaching, it is possible to describe the detection status of the automated driving ECU 50 to the occupant. In addition, via the input from the occupant in response to the inquiry notification, the automated driving ECU 50 may more accurately determine the status of the approaching emergency vehicle. In addition, the alert notification can issue an alert to occupant correctly about the possibility that two or more emergency vehicles are approaching.

In addition, in the present embodiment, when the automated driving ECU 50 executes the avoidance behavior to avoid the emergency vehicles in response to the approach of two or more emergency vehicles, the time when the avoidance behavior will be ended is notified to the occupant by the control duration notification. Therefore, even if the stopped state or the low-speed traveling state of the host vehicle Am lasts for a long period of time because of the avoidance behavior for two or more emergency vehicles, the occupant's anxiety about whether the automated driving ECU 50 is normally functioning can be reduced.

In the present embodiment, when, after the emergency vehicle got apart from the host vehicle, the detection information indicating another emergency vehicle approaching the host vehicle Am is acquired, it is determined that the number of emergency vehicles approaching the host vehicle Am is two or more. According to the above, even in a scene where two or more emergency vehicles approach the host vehicle Am at different times, it is possible to provide the same alert as in a scene where two or more emergency vehicles approach the host vehicle Am at the same time.

Furthermore, in the present embodiment, when, after the emergency vehicle got apart from the host vehicle, approach of a next emergency vehicle is ascertained before elapse of a given time period, the amount of information indicated to the occupant in the emergency vehicle approach notification is changed. Thus, in the case of approach of emergency vehicles in succession, the occupant becomes ready for the emergency vehicle at the time when the occupant ascertains that the first emergency vehicle is approaching. Therefore, for example, by reducing the amount of information in the approach notification for the second emergency vehicle, it is possible to present information to the occupant in an easily understandable and less-bothersome manner.

In addition, in the present embodiment, the contents of the avoidance behavior for emergency vehicle avoidance are changed depending on whether there the number of emergency vehicles approaching the host vehicle Am is one or more than one. Therefore, the host vehicle Am can perform the avoidance behavior corresponding to the number of approaching emergency vehicles. Therefore, it is possible to achieve the automated driving control useful for the occupant when two or more emergency vehicles are detected.

In the present embodiment, in the case of approach of two or more emergency vehicles to the host vehicle Am, the reroute control is executed to reestablishes the scheduled travel route of the host vehicle Am so as to avoid the estimated travel routes of the emergency vehicles. Therefore, when a large-scale disaster is occurring in a nearby area and it is presumed that two or more emergency vehicles are approaching, the reroute control is executed, so that the host vehicle Am can get apart from the area where two or more emergency vehicles are gathering. As a result, it is possible to prevent repeatedly executing the avoidance behavior such as stopping is repeatedly executed each time the approach of the emergency vehicle.

Furthermore, in the present embodiment, if, after the emergency vehicle being a first emergency vehicle got apart from the host vehicle Am, approach of a next emergency vehicle being a second emergency vehicle is ascertained before elapse of a given time period, a re-avoidance behavior being the avoidance behavior for avoiding the second emergency vehicle is executed such that the content of the avoidance behavior for avoiding the second emergency vehicle is different form that for avoiding the first emergency vehicle. According to the above, the automated driving ECU 50 can select an appropriate avoidance behavior for the second emergency vehicle.

In addition, in the present embodiment, as the re-avoidance behavior to avoid the second emergency vehicle, the reverse moving control to move the host vehicle Am in reverse or the reroute control to reestablish the scheduled travel route of the host vehicle Am so as to avoid the estimated travel route of the emergency vehicle is executed. By executing the reverse moving control, the host vehicle Am vehicle can promptly give way to the emergency vehicle. By executing the reroute control, the host vehicle Am vehicle can get apart from the area where two or more emergency vehicles are gathering.

In the present embodiment, the type of occupant in the host vehicle Am is also ascertained. Then, when two or more emergency vehicles are approaching the host vehicle Am and a specific type of occupant is in the vehicle Am, the control to approach the emergency vehicle is executed. According to the above, if an occupant has the skill for a disaster site where the emergency vehicle is rushing, etc., the automated driving ECU 50 can send the occupant to the disaster site by switching the vehicle control of the host vehicle Am. As a result, it can contribute to saving lives.

In the above embodiment: the automated driving ECU 50 corresponds to an "automated driving control device"; the information linkage unit 61 corresponds to a "vehicle-internal recognition unit"; the environment recognition unit 62 corresponds to an "information ascertaining unit"; and the behavior determination unit 63 corresponds to a "behavior control unit." The information linkage unit 82 corresponds to an "information acquisition unit", the presentation control unit 83 corresponds to a "notification control unit", and the HMI control device 100 corresponds to a "presentation control device.

### (Other Embodiments).

Although one embodiment according to the present disclosure has been described above, the present disclosure is not limited to the above-described embodiment and is applicable to various embodiments and combinations without departing from the spirit and scope of the present disclosure.

In the above embodiment, manners of the notification to the occupant and policies of the traveling control for emergency vehicle avoidance are different depending on whether the number of detected emergency vehicles is one or more than one. In contrast, in a first modification example of the above embodiment, manners of the notification to the occupant are different depending on whether or not the number of detected emergency vehicles is more than one, but the avoidance behavior of the host vehicle Am does not depend on the number. In a second modification example of the above embodiment, the avoidance behavior of the host vehicle Am differs depending on whether or not the number of detected emergency vehicles is more than one but the manners of the notification to the occupant do not depend on the number.

In a third modification example of the above embodiment, the host vehicle Am including the HMI control device 100 does not include the automated driving ECU 50. In other words, the host vehicle Am is not equipped with an automated driving function. The HMI control device 100 has a function corresponding to the environment recognition unit 62 and acquires the detection information on the emergency vehicle approaching the host vehicle Am based on the sound data acquired from the vehicle-external acoustic sensor 32. As in the third modification example, the HMI control device 100 can execute the information presentation useful for the occupant when two or more emergency vehicles are detected.

The automated driving ECU 50 in the above embodiment mainly executes the autonomous traveling control of the driving automation level 3. In contrast, the automated driving ECU 50 in a fourth modification example of the above embodiment executes the autonomous traveling control of the driving automation level 4 or the driving automation level 5, in which the driving takeover to the driver does not happen. The automated driving ECU 50 in a fifth modification example of the above embodiment executes the autonomous traveling of the host vehicle Am without a driver on board, under remote monitoring by a remote monitoring person. In the fourth or fifth modification example, it is possible to execute the information presentation useful for the occupant when two or more emergency vehicles are detected.

In the above embodiment, manners of the emergency vehicle approach notification and contents of the avoidance behavior are different depending on whether the number of emergency vehicles is one or more than one. In a sixth modification example of the above embodiment, when two or more emergency vehicles have been detected, as the number of detected emergency vehicles increases to 2, 3, 4... the emergency vehicle approach notification and/or and the avoidance behavior differs in manner or content. Furthermore, in the above embodiment, as the number of emergency vehicles increases, the approach notification is made in a more emphasized manner. In contrast, in a seventh modification example of the above embodiment, as the number of emergency vehicles increases, the approach notification may be made in a less emphasized manner.

The information linkage unit 61 in the above embodiment acquires the occupant identification information from the vehicle-internal monitoring device 29. The occupant identification information is not limited to imaging information by the vehicle-internal monitoring device 29. For example, a variety of pre-registered information is usable as the occupant identification information, including information pre-registered by the owner of the host vehicle Am, information set by the user by a touch operation to the CID 22 (navigation screen, etc.), and information registered with car rental and car dispatch services.

In the above embodiment, when the emergency vehicles have been detected in succession, the amount of information indicated to occupants in the emergency vehicle approach notification is reduced. In contrast, in an eighth modification example of the above embodiment, when a caution different than the already notified (first) emergency vehicle happens in relation to the second or subsequent emergency vehicles, the amount of information indicated to the occupant in the emergency vehicle approach notification is increased. The rescue action process (see FIG. 6) to move a specific occupant such as medical person to the disaster site, etc., may not be executed. In addition, the description of type when the special emergency vehicle sound is detected (see FIG. 7 for S58) may also be omitted.

The automated driving ECU 50 in the above embodiment is able to execute the stop control, the low-speed travel control, the reroute control, and the reverse moving control. In contrast, the automated driving ECU 50 in a ninth modification example of the above embodiment is able to execute only part of these behavioral controls.

At least part of functions of the automated driving ECU 50 may be implemented in another control device in the in-vehicle network 1. For example, in a tenth modification example of the above embodiment, a dedicated ECU (hereinafter, "acoustic analysis ECU") that executes analysis process on the sound data and outputs the analysis information to the environment recognition unit 62 is provided in the in-vehicle network 1. The function of recognizing the emergency vehicles is implemented in the acoustic analysis ECU. In this tenth modification example, the system including the automated driving ECU 50 and the acoustic analysis ECU corresponds to an "automated driving control device."

At least part of functions of the HMI control device 100 may be implemented in another control device in the in-vehicle network 1. For example, in an eleventh modification example of the above embodiment, the HMI control device 100 cooperates with the automated driving ECU 50 to execute the emergency vehicle notification. In the eleventh modification example, the system including the HMI control device 100 and the automated driving ECU 50 corresponds to a "presentation control device". The processing function of the HMI control device 100 may be implemented in the control circuit of the display device such as the meter display 21, the CID 22, etc.

In a twelfth modification example of the above embodiment, the functions of the HMI control device 100 are integrated into the automated driving ECU 50. In a thirteenth modification example of the above embodiment, the functions of the traveling control ECU 40 are integrated into the automated driving ECU 50. In these modification examples 12 and 13 also, the automated driving ECU 50 integrated with another ECU, in other words, an integrated ECU corresponds to a "presentation controller" and an "automated driving control device".

Each function provided by the HMI control device and the automated driving ECU in the above embodiment can be implemented by software and hardware executing the software, by software alone, by hardware alone, and by a complex combination these. Furthermore, when the function is provided by an electronic circuit as hardware, each function can also be implemented by a digital circuit including a number of logic circuits and by an analog circuit. The software for the automated driving function may include, for example, at least in part, a code automatically generated by a neural network trained using real-world camera images or a language model.

Each processing unit in the above embodiment is hardware for computational processing coupled with a RAM. The processing unit includes at least one computing core, such as a CPU (Central Processing Unit), a GPU (Graphics Processing Unit), etc. The processing unit may further include an FPGA (Field-Programmable Gate Array), a NPU (Neural network Processing Unit), or an IP core having another dedicated function. These processing units may be individually mounted on a printed circuit board, or may be implemented in a SoC (System on a Chip), etc., together with a RAM, etc. ASIC (Application Specific Integrated Circuit, FPGA, NPU, or another IP core may be implemented in the SoC.

The form of the storage medium (non-transitory tangible computer readable medium) storing various programs, etc. in the above embodiments may be changed as appropriate. Furthermore, the storage medium is not limited to being mounted on a circuit board but may be provided in the form of a memory card or the like, which is inserted into a slot and electrically connected to a control circuit such as an automated driving ECU. The storage medium may be an optical disk, a hard disk drive, or a solid-state drive that serves as a source for copying or distributing the program to the automated driving ECU or other devices.

The vehicle equipped with the above HMI control device automated driving ECU is not limited to a common private passenger car (personally owned vehicles, POV). The vehicle equipped with the HMI control device and the automated driving ECU may be a vehicle for rental, a vehicle for manned cab, a vehicle for ridesharing, a cargo vehicle, or a bus. The vehicle equipped with the HMI control device and the automated driving ECU may be a right-hand drive vehicle or a left-hand drive vehicle. Furthermore, the traffic environment in which the vehicle travels may be a left-hand traffic environment or a right-hand traffic environment. The presentation control and the automated driving control according to the present disclosure may be optimized as appropriate according to road traffic laws of each country and region, as well as the steering wheel position of the vehicle.

The control units and methods described in the present disclosure may be implemented by a special purpose computer provided by configuring a processor programmed to execute one or more functions embodied by a computer program. Alternatively, the control units and methods described in the present disclosure may be implemented by a dedicated hardware logic circuit. Alternatively, the control units and methods described in the present disclosure may be implemented by one or more special purpose computers provided by configuring one or more processors that executes a computer program in combination with one or more hardware logic circuits. The computer program may be stored on a computer-readable, non-transitory storage medium as instructions executed by a computer.

### (Disclosure of Technical Ideas).

This specification discloses multiple technical ideas described in multiple items listed below. Some items may be described in a multiple dependent form in which a plurality of preceding items is referenced to in an alternative form. In addition, some items may be described in a multiple dependent form in which a plurality of preceding items including an item described in a multiple dependent form is referenced to in an alternative form. The item described in the multiple dependent form defines multiple technical ideas.

### (Technical Idea 1).

A presentation control device that controls presentation of information to an occupant of a host vehicle includes:
an information acquisition unit that acquires detection information on an emergency vehicle approaching the host vehicle and ascertains whether or not the number of emergency vehicles approaching the host vehicle is more than one; and
a notification control unit that executes an approach notification to indicate emergency vehicle approach to the occupant in different manners depending on whether the number of emergency vehicles approaching the host vehicle is one or more than one.

### (Technical Idea 2).

In the presentation control device according to technical idea 1:
the notification control unit changes the approach notification into a more emphasized manner as the number of emergency vehicles approaching the host vehicle increases.

### (Technical Idea 3).

In the presentation control device according to technical idea 1 or 2:
the information acquisition unit ascertains a type of siren sounded by the emergency vehicle; and
the notification control unit indicates information related to the type of siren to the occupant.

### (Technical Idea 4).

In the presentation control device according to any one of technical ideas 1 to 3:
when the number of emergency vehicles approaching the host vehicle is not confirmed, the information acquisition unit ascertains presumption information indicating presumption that the number of emergency vehicles are two or more; and
based on the presumption information, the notification control unit executes at least one of: a notification to make an inquiry to the occupant about whether or not two or more emergency vehicles are present; and a notification to issue an alert to the occupant about a possibility that the two or more emergency vehicles are approaching.

### (Technical Idea 5).

In the presentation control device according to any one of technical ideas 1 to 4:
when an automated driving function of the host vehicle executes an avoidance behavior to avoid the emergency vehicle in response to approach of the emergency vehicle, the notification control unit notifies the occupant about a time when the avoidance behavior will be ended.

### (Technical Idea 6).

In the presentation control device according to any one of technical ideas 1 to 5:
when, after the emergency vehicle got apart from the host vehicle, the information acquisition unit acquires the detection information on another emergency vehicle approaching the host vehicle, the information acquisition unit determines that the number of emergency vehicles approaching the host vehicle is more than one.

### (Technical Idea 7).

In the presentation control device according to any one of technical ideas 1 to 6:
when, after the emergency vehicle got apart from the host vehicle, approach of a next emergency vehicle is ascertained before elapse of a given time period, the notification control unit changes an amount of information indicated to the occupant in the approach notification.

### (Technical Idea 8).

An automated driving control program enabling a host vehicle (Am) to travel under an autonomous traveling control causes at least one processing unit to execute a process including steps of:
acquiring (S52) detection information on an emergency vehicle approaching the host vehicle;
ascertaining (S53) whether or not the number of emergency vehicles approaching the host vehicle is more than one; and
executing (S54, S55) a notification control to indicate emergency vehicle approach to the occupant in different manners depending on whether the number of emergency vehicles approaching the host vehicle is one or more than one.

### (Technical Idea 9).

An automated driving control device enabling a host vehicle (Am) to travel under an autonomous traveling control includes:
an information acquisition unit (62) that acquires detection information on an emergency vehicle approaching the host vehicle and ascertains whether or not the number of emergency vehicles approaching the host vehicle is more than one; and
a behavior control unit (63) that executes different contents of avoidance behavior for avoiding the emergency vehicle, depending on whether the number of emergency vehicles approaching the host vehicle is one or more than one.

### (Technical Idea 10).

In the automated driving control device according to technical idea 9:
when the number of emergency vehicles approaching the host vehicle is more than one, the behavior control unit executes a reroute control to reestablish a scheduled travel route of the vehicle so as to avoid estimated travel routes of the emergency vehicles.

### (Technical Idea 11).

In the automated driving control device according to technical idea 9 or 10:
when, after the emergency vehicle being a first emergency vehicle got apart from the host vehicle, approach of a next emergency vehicle being a second emergency vehicle is ascertained before elapse of a given time period, the behavior control unit executes the avoidance behavior for avoiding the second emergency vehicle such that a content of the avoidance behavior for avoiding the second emergency vehicle is different from a content of the avoidance behavior for avoiding the first emergency vehicle.

### (Technical Idea 12).

In the automated driving control device according to technical idea 11:
as the avoidance behavior for avoiding the second emergency vehicle, the behavior control unit executes: a reverse moving control to move the host vehicle in reverse; or a route control to reestablish a scheduled travel route of the host vehicle so as to avoid an estimated travel route of the emergency vehicle.

### (Technical Idea 13).

The automated driving control device according to any one of technical ideas 9 to 12 further includes:
a vehicle-internal ascertaining unit (61) that ascertains type of the occupant in the host vehicle, wherein:
when the number of emergency vehicles approaching the host vehicle is more than one and the occupant in the host vehicle is of a specific type, the behavior control unit executes a control to approach the emergency vehicle.

### (Technical Idea 14).

An automated driving control program enabling a host vehicle (Am) to travel under an autonomous traveling control includes a process executed by at least one processing unit, the process including steps of:
acquiring (S12) detection information on an emergency vehicle approaching the host vehicle;
ascertaining (S14) whether or not the number of emergency vehicles approaching the host vehicle is more than one; and
executing (S34, S35) different contents of avoidance behavior for avoiding the emergency vehicle, depending on whether the number of emergency vehicles approaching the host vehicle is one or more than one.

## Claims

1. A presentation control device that controls presentation of information to an occupant of a host vehicle (Am), comprising:
an information acquisition unit (82) that acquires detection information on an emergency vehicle approaching the host vehicle and ascertains whether or not the number of emergency vehicles approaching the host vehicle is more than one; and
a notification control unit (83) that executes an approach notification to indicate emergency vehicle approach to the occupant in different manners depending on whether the number of emergency vehicles approaching the host vehicle is one or more than one.

2. The presentation control device according to claim 1, wherein:
the notification control unit changes the approach notification into a more emphasized manner as the number of emergency vehicles approaching the host vehicle increases.

3. The presentation control device according to claim 1, wherein:
the information acquisition unit ascertains a type of siren sounded by the emergency vehicle; and
the notification control unit indicates information related to the type of siren to the occupant.

4. The presentation control device according to claim 1, wherein:
when the number of emergency vehicles approaching the host vehicle is not confirmed, the information acquisition unit ascertains presumption information indicating presumption that the number of emergency vehicles are two or more; and
based on the presumption information, the notification control unit executes at least one of: a notification to make an inquiry to the occupant about whether or not two or more emergency vehicles are present; and a notification to issue an alert to the occupant about a possibility that the two or more emergency vehicles are approaching.

5. The presentation control device according to claim 1, wherein:
when an automated driving function of the host vehicle executes an avoidance behavior to avoid the emergency vehicle in response to approach of the emergency vehicle, the notification control unit notifies the occupant about a time when the avoidance behavior will be ended.

6. The presentation control device according to claim 1, wherein:
when, after the emergency vehicle got apart from the host vehicle, the information acquisition unit acquires the detection information on another emergency vehicle approaching the host vehicle, the information acquisition unit determines that the number of emergency vehicles approaching the host vehicle is more than one.

7. The presentation control device according to claim 1, wherein:
when, after the emergency vehicle got apart from the host vehicle, approach of a next emergency vehicle is ascertained before elapse of a given time period, the notification control unit changes an amount of information indicated to the occupant in the approach notification.

8. A presentation control method of controlling presentation of information to an occupant of a host vehicle (Am), comprising a process executed by at least one processing unit, the process including steps of:
acquiring (S52) detection information on an emergency vehicle approaching the host vehicle;
ascertaining (S53) whether or not the number of emergency vehicles approaching the host vehicle is more than one; and
executing (S54, S55) a notification control to indicate emergency vehicle approach to the occupant in different manners depending on whether the number of emergency vehicles approaching the host vehicle is one or more than one.

9. An automated driving control device enabling a host vehicle (Am) to travel under an autonomous traveling control, comprising:
an information acquisition unit (62) that acquires detection information on an emergency vehicle approaching the host vehicle and ascertains whether or not the number of emergency vehicles approaching the host vehicle is more than one; and
a behavior control unit (63) that executes different contents of avoidance behavior for avoiding the emergency vehicle, depending on whether the number of emergency vehicles approaching the host vehicle is one or more than one.

10. The automated driving control device according to claim 9, wherein:
when the number of emergency vehicles approaching the host vehicle is more than one, the behavior control unit executes a reroute control to reestablish a scheduled travel route of the vehicle so as to avoid estimated travel routes of the emergency vehicles.

11. The automated driving control device according to claim 9, wherein:
when, after the emergency vehicle being a first emergency vehicle got apart from the host vehicle, approach of a next emergency vehicle being a second emergency vehicle is ascertained before elapse of a given time period, the behavior control unit executes the avoidance behavior for avoiding the second emergency vehicle such that a content of the avoidance behavior for avoiding the second emergency vehicle is different from a content of the avoidance behavior for avoiding the first emergency vehicle.

12. The automated driving control device according to claim 11, wherein:
as the avoidance behavior for avoiding the second emergency vehicle, the behavior control unit executes: a reverse moving control to move the host vehicle in reverse; or a route control to reestablish a scheduled travel route of the host vehicle so as to avoid an estimated travel route of the emergency vehicle.

13. The automated driving control device according to claim 9, further comprising:
a vehicle-internal ascertaining unit (61) that ascertains type of the occupant in the host vehicle, wherein:
when the number of emergency vehicles approaching the host vehicle is more than one and the occupant in the host vehicle is of a specific type, the behavior control unit executes a control to approach the emergency vehicle.

14. An automated driving control method enabling a host vehicle (Am) to travel under an autonomous traveling control, comprising a process executed by at least one processing unit, the process including steps of:
acquiring (S12) detection information on an emergency vehicle approaching the host vehicle;
ascertaining (S14) whether or not the number of emergency vehicles approaching the host vehicle is more than one; and
executing (S34, S35) different contents of avoidance behavior for avoiding the emergency vehicle, depending on whether the number of emergency vehicles approaching the host vehicle is one or more than one.
